(19)

**Europäisches Patentamt**
**European Patent Office**
**Office européen des brevets**

(11) **EP 1 718 003 B1**

(12) **EUROPEAN PATENT SPECIFICATION**

(45) Date of publication and mention
of the grant of the patent:
**26.11.2008 Bulletin 2008/48**

(51) Int Cl.:
**H04L 12/56** (2006.01)

(21) Application number: **05425269.7**

(22) Date of filing: **29.04.2005**

(54) **Method to overcome the strict metric limitation of the RIP protocol without having impact on existing installations**

Verfahren um die strenge Metrikeinschänkung des RIP-Protokolles zu überwinden ohne existierende Einrichtungen zu beeinflussen

Procédé pour surmonter la limitation de la métrique du protocole RIP évitant l'impact sur des installations existantes

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**02.11.2006 Bulletin 2006/44**

(73) Proprietor: **Nokia Siemens Networks S.p.A.**
**20060 Cassina de'Pecchi (MI) (IT)**

(72) Inventor: **Fumagalli, Davide**
**20149 Milano (IT)**

(74) Representative: **Fischer, Michael et al**
**Nokia Siemens Networks GmbH & Co.KG**
**Intellectual Property Rights**
**P.O.Box 80 17 60**
**81541 München (DE)**

(56) References cited:
**EP-A- 1 098 480          US-A1- 2002 176 371**
**US-A1- 2004 151 179**

• **MALKIN BAY NETWORKS G: "RIP Version 2" IETF STANDARD, INTERNET ENGINEERING TASK FORCE, IETF, CH, November 1998 (1998-11), XP015008237 ISSN: 0000-0003**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to the field of the Telecommunication Management Networks (TMN), and more precisely to a method to overcome the strict metric scope of the RIP (Routing Information Protocol) protocol without having impact on existing installations.

### BACKGROUND ART

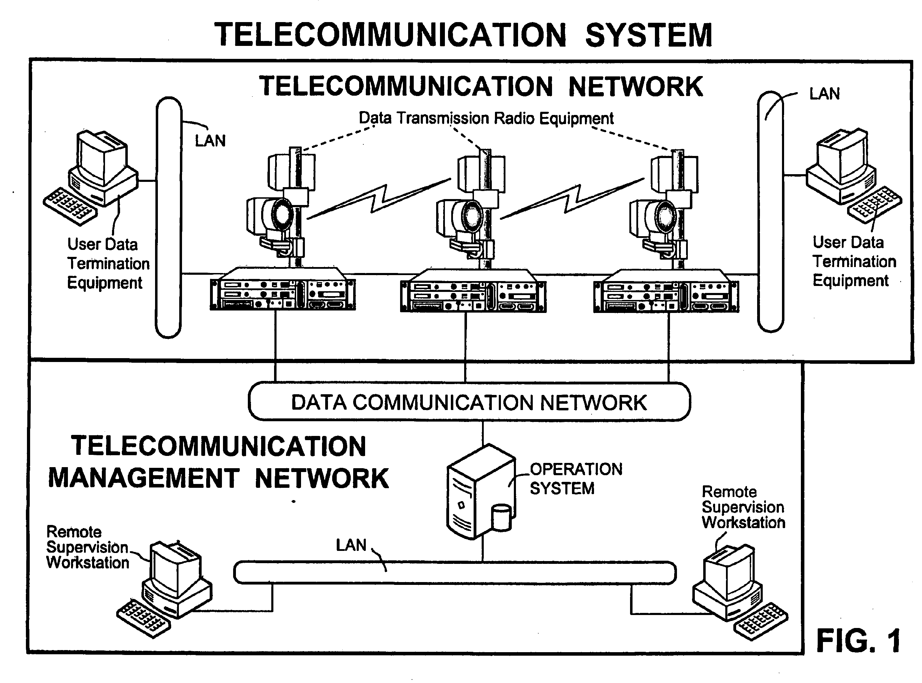

The concept of a TMN is defined in **Ref. [1]** of the Bibliographic References added at the end of the description. According to this document, a TMN is conceptually a separate network that interfaces a telecommunications network at several different points to send/receive information to/from it and to control its operation. A TMN may use parts of the telecommunications network to provide its communications. The relationship between a TMN and the telecommunication network that is managed is shown in **Fig.1.** With reference to **fig.1,** a Telecommunication System constituted by a Telecommunication Network (TN) and the respective Telecommunication Management Network is visible. In the figure, the Telecommunication Network includes two LANs (Local Area Network) connected to each other by means of a radio links comprising three Data Transmission Radio Equipment, for example the Applicant's low capacity PDH microwaves equipments named SRAL-XD. Each LAN is interfaced to one or more User Data Termination Equipments constituted, for example, by Personal Computers. More in general, a schematization of the Telecommunication Network reported in **Ref.[1]** includes two terminal apparatuses connected by means Exchanges and Transmission Systems interleaved to each other.

The Telecommunication Management Network TMN includes the following elements: a Data Communication Network, one or more Operation Systems, and Remote Supervision Workstations constituted, for example, by Personal Computers.

In the operation, the interface points between the TMN and the TN are formed by Exchanges and Transmission systems. For the purpose of management, these interface points are connected to the Operations Systems via Data Communication Network. The TMN information architecture is based, in order to promote interoperability, on standardized open management paradigms that support the standardized modelling of the information to be communicated. For example, each SRAL-XD equipment has a dedicated TMN Element (NE) based on a single controller exchanging messages with all the other system units. The information stored and processed by the internal controller is made available externally to the network operators through the following interfaces:

a) RS232 towards a local PC, for an in-site management access.

b) RS485 bus structured for connections of different SRAL-XDs located in the same site. An embedded Data Communication Channel (DCC), a 64 kbit/s channel in the radio frame overhead, provides the link towards gateway elements of TMN. When it is not possible directly connect the RS485 interfaces, a 64 kbit/s add-drop facility is available to use a slot of a 2 Mbit/s traffic signal.

c) A 100BaseT Ethernet two-ports HUB interface to interconnect equipment in the same site over a LAN and to connect it to the TMN OS (if reachable).

The routing of the management information inside the SRAL-XD network is obtained by means of a TCP/IP protocol directly integrated within the radio controller, which also acts as an IP router. See **Ref.[4]** for IP (Internet Protocol) and **Ref.[5]** for TCP (Transport Control Protocol).

The Operations Systems perform most of the management functions; these functions may be carried out by human operators but also automatically. It is possible that multiple Operations Systems will perform a single management function. In this case, the Data Communication Network is also used to exchange management information between the Operation Systems. The Data Communication Network is also used to connect the Supervision Workstations, which allow operators to interpret management information.

Separating the management network from the telecommunication network prevents potential problems with fault management: even in the case of a failure in the telecommunication network, management will still be able to access the failing components. Data Communication Channels (DCC) are embedded into user data channels and their purpose is to transport all the TCP/IP TMN dedicated traffic. In this scenario each radio equipment is acting as a very small IP router, capable to forward datagrams, carrying supervisory data, over DCC's towards the OS (Operation System) main site. Routing is the task of finding a path from a sender to a desired destination. A particular attention on the routing task should be done when the topology of the network is subject to change dynamically. The microwaves networks, due to the fading on the radio path caused by external events (like storms, snow, and so on) are more exposed to potentially loss of communication than other types of data networks (like cable, optical fiber, etc.). To guarantee the routing consistent with changes of topology the use of a dynamic routing protocol to manage the network it's a must.

The IETF (Internet Engineering Task Force) RIP (Routing Information Protocol) protocol (Version-1 **REF.[2]** and Version-2 **REF.[3])** was chosen as dynamic routing protocol for both its simplicity and the small work load it causes on the microprocessor inside the equipment. The RIP is intended to be used within an IP-based Internet. Internet is organized into a number of networks connected by special purpose gateways known as routers. The networks may be composed by either point-to-point links or by broadcast buses such as Ethernet or Token-Ring. Hosts and routers are presented with IP datagrams addressed to some host. Routing is the method by which the host or router decides where to send the datagram. Distance vector algorithms, such as the one used by RIP, get their name from the fact that it is possible to compute optimal routes using, as the only information exchanged, the list of distances between routers that participate in the routing protocol. Distance is a somewhat generalized concept, which may be used to cover the time delay in getting messages to the entity, the cost of sending messages to it, etc. Generally, information about all entities connected to one network is summarized by a single entry in a routing database (also known as RIB, Routing Information Base), the entry describes the route to all destinations on that network. Each entry in RIB includes the IP address of next router to which datagrams destined for the entity should be sent. In addition, it includes a "metric" measuring the total distance to the entity (destination network). The most important information exchanged by routers is carried in update messages. Each router that participates in the routing scheme sends (nearly every 30 seconds) update messages that describe the routing database as it currently exists in that router. It is possible to maintain optimal routes for the entire system by using only information obtained from neighbouring entities. In simple networks, it is common to use a metric that simply counts how many routers a message must go through. The main requirement is that it must be possible to represent the metric as a sum of "costs" for individual hops. Let $D(i,j)$ represent the metric of the best route from entity i to entity j. It should be defined for every pair of entities. $d(i,j)$ represents the costs of the individual steps. Formally, let $d(i,j)$ represent the cost of going directly from entity i to entity j. It is infinite if i and j are not immediate neighbours. Since costs are additive, it is easy to show that the best metric must be described by:

$$D(i,i) = 0,$$

for all i

$$D(i,j) = \min_{k} [d(i,k) + D(k,j)],$$

otherwise

and that the best routes start by going from i to those neighbours k for which $d(i,k) + D(k,j)$ has the minimum value. It turns out that one can compute the metric by a simple algorithm based on this. Entity i gets its neighbours k to send it their estimates of their distances to the destination j. When i gets the estimates from k, it adds $d(i,k)$ to each of the numbers. This is simply the cost of traversing the network between i and k. Now and then i compares the values from all of its neighbours and picks the smallest.

In this simple way the protocol provides a way to let all routers in a network to synchronize each other. "Convergence time" is the time needed to have all routers of a network aligned with the right information about all the reachable networks.

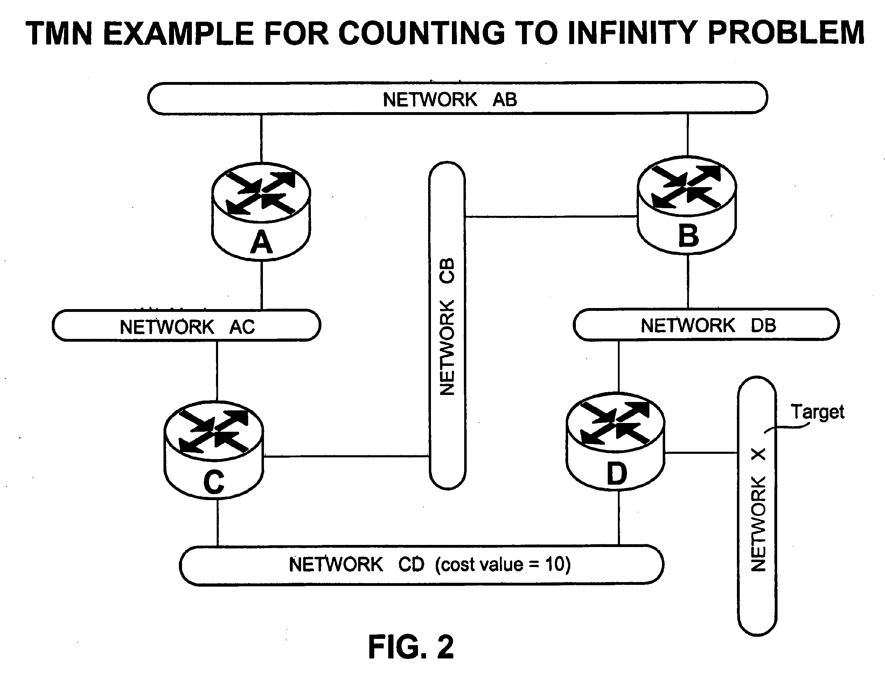

Unfortunately RIP may suffers of endless convergence time. This drawback is called "counting to infinity". **Fig. 2** shows an example taken from **REF.[3]** of a network in which this problem may happen. With reference to **fig.2** and **REF.[3],** we see a network constituted by four routers A, B, C, and D and four networks named AB, AC, CB, DB, CD, plus a target network X. Network AB interconnects routers A and B directly, and so on for the other networks. All networks have got a cost (metric) of one, except the network CD that has got a cost of 10. The destination network X is reachable as in the following:

-    from router D with metric 1 (directly connected),
-    from router B with metric 2, route via D,
-    from router C with metric 3, route via B, and
-    from router A with metric 3, route via B.

Now suppose that the link from B to D fails. The routes should now adjust to use the link from C to D. Unfortunately, it will take a while for this to this to happen. The routing changes start when B notices that the route to D is no longer usable. For simplicity, the chart below assumes that all gateways send updates at the same time. The chart shows the metric for the target network, as it appears in the routing table at each gateway.

| time → ↓D-B link fails (dir = directly connected; unreach = unreachable) | | | | | | | | |
|---|---|---|---|---|---|---|---|---|
| D | dir, 1 | dir, 1 | dir, 1 | dir, 1 | dir, 1 | ... | dir, 1 | dir, 1 |
| B | D,2 | unreach | C, 4 | C, 5 | C, 6 | ... | C, 11 | C, 12 |
| C | B,3 | B, 3 | A, 4 | A, 5 | A, 6 | ... | A, 11 | D, 11 |
| A | B,3 | B, 3 | C, 4 | C, 5 | C, 6 | ... | C, 11 | C, 12 |

Here's the problem: B is able to get rid of its failed route using a timeout mechanism. But vestiges of that route persist in the system for a long time. Initially, A and C still think they can get to D via B. So, they keep sending updates listing metrics of 3. In the next iteration, B will then claim that it can get to D via either A or C. Of course, it can't. The routes being claimed by A and C are now gone, but they have no way of knowing that yet. And even when they discover that their routes via B have gone away, they each think there is a route available via the other.

It is useful to have a way to notify neighbors that there currently isn't a valid route to some network. RIP does this through a normal update message, by marking that network as unreachable. A specific metric value is chosen to indicate an unreachable destination; that metric value is larger than the largest valid metric that we expect to see. This value is normally referred to as "infinity", since it is larger than the largest valid metric. The choice of infinity is a trade-off between network size and speed of convergence. A metric value of 16 is the current RIP choice, this means a biggest possible propagated metric value of 15. If a router can't see anymore a directly connected network, it will send the special distance value of 16 associate to this network, to communicate that it will be "no more reachable" towards him. When a router receives for a particular network the "no more reachable" distance value, it will take care of removing the matching network entry from its database, and so it will stop to propagate it to its neighbours. If a router does not receive anymore info about a particular known IP network it will declare, after a fixed amount of time, the IP network as "no more reachable" to its neighbours. The small "no more reachable" value of 16 guaranties routers convergence time to be small (in the order of some minutes).

## OUTLINED TECHNICAL PROBLEM

Microwaves networks have often a very large number of radio equipments performing router functions and so the main problem that arises when using RIP protocol, independently of Version 1 or 2, is about the maximum reachable distance. We have already seen that the reason why this value was chosen so small was to avoid the "endless loop" as depicted in **fig.2**. Taking advantage by the fact that the TMN microwaves networks may use only a subset of possible network topologies, the design of the TMN can be oriented towards linear or tree or ring topologies to avoid this kind of behaviour. So we could think to increase the maximum permissible distance without problems, but in this way we will loose the compatibility with other standard RIP routers (including legacy microwave equipments of the same Applicant).

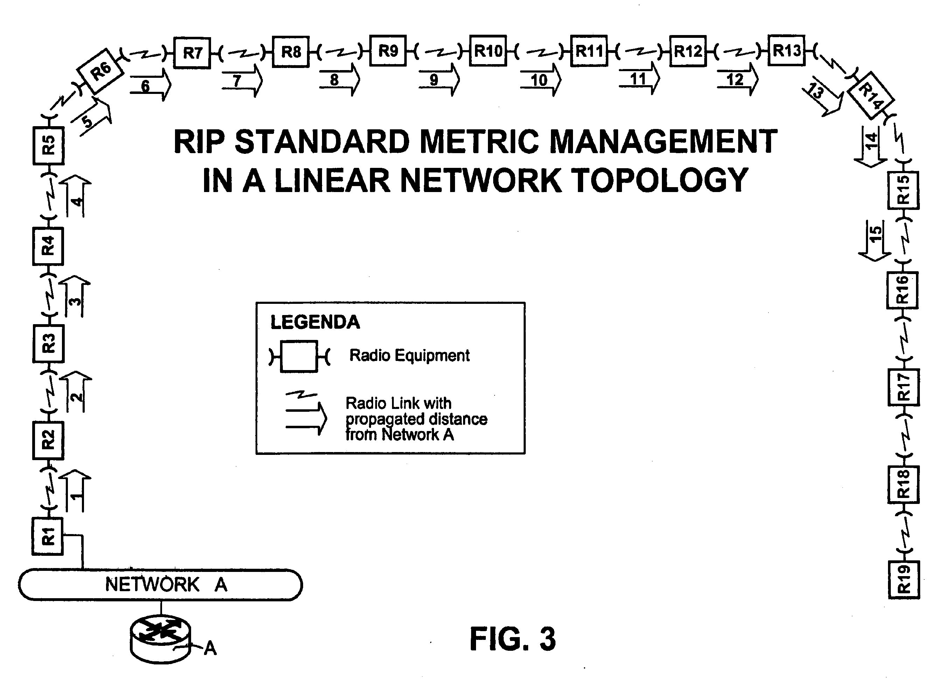

**Fig.3,** shows how the RIP protocol is working in a linear topology network. With reference to **fig.3,** we see a router A connected to a Network A in its turn connected to an end apparatus R1 of a radio network comprising 19 Radio Equipments R1 to R19 connected point-to-point in linear configuration. The scenario of **fig.3** corresponds to a simplified embodiment of the Telecommunication System of **fig.1** where each Radio Equipment performs both payload data transmission and routing TMN information, while Network A and router A connect routers R1 to R19 to the TMN Operation System. Each Radio Equipment includes two bidirectional interfaces towards the adjacent equipments used for propagating TMN information through the network, distance (metric) included. The first R1 equipment has only a radio interface with R2, the other interface is wired to the Network A. The value of the incoming and the outgoing metrics at the respective interfaces of each router R1 to R19 are depicted inside the large arrows indicating the direction of the radio signal. The metric is simply incremented by 1 at every hope. Using the maximum permitted metric value of 16 as defined in **Ref.[3]** makes the remote routers R16, R17, R18 and R19 unable to be reached by Network A. In fact, the router R16 receives information about Network A with such metric value of 15 and increments the metric to 16 while storing 15 into its database. Then R16 removes the entry of Network A from its database and does not propagate any metric to its neighbour R17, causing also both R18 and R19 to be aware that Network A is no more reachable.

A known solution to circumvent the highlighted problem is to use a point-to-point communication channel external to the radio network depicted in **fig.3** in order to connect the remote routers behind the 15 hops limit directly to a near one. This often means either to lease a dedicated and very expensive data communication line from another supplier or even to use a slice of the customer payload, but this latter is a strong equipment limitation and also a really expensive solution.

Other Internet routing protocols based on different concepts than distance, e.g. OSPF (Open Shortest-Path First), don't suffer of this limitation design but they are too much demanding in hardware requirements to be integrated in small radio equipments. OSPF is defined in RFCs 1583, 1584 and 1793.

EP-A-1098480 (withdrawn) discloses an upgrade to Message Transfer Part - Level 3 (MTP3) for Signalling System No.7 (SS7) aimed to add the metric (cost) concept. More precisely, a method is disclosed for lifetime limitation of datagrams in packet-switched networks, wherein each datagram includes a Hop-Count-data field specifying its lifetime. A router which sweeps datagrams on its way through the network, can change the HC-data field before a datagram is transferred farther. The HC-data field is changed only when further conditions are produced in the network.

Being, the HC-data field in such a way equivalent to the RIP metric field, and that lifetime is limited dynamically, it can be argued that the method disclosed in EP-A-1098480 might suffer of the same drawbacks as highlighted for standard RIP.

US 20021176371 A1 discloses a method and system for preventing transmission loops in a ring network that utilizes label switching (see e.g. RFC 3032 for multi-protocol label switching (MPLS)). The method involves generating right side and left side ring packets from an ingress packet and setting right and left time-to-live (TTL) values for the packets that prevent the packets from travelling on the same transmission link avoiding in this way undesirable transmission loops, mainly originated by packet flooding when a destination is unknown. Specifically, the physical topology of a ring is transformed into a series of logical arcs using the TTL field of the label switching header to limit the number of hops that packets can travel to the left and right of a particular label switching router (LSR) on a ring.

Because of a strict metric horizon of 16 hops set for infinity, in standard RIP-v1/v2 the problem to avoid undesirable transmission loops is not so dramatic as in US 2002/176371 A1 and breaking a ring into two arcs is unnecessary.

**OBJECT OF THE INVENTION**

The main object of the present invention is that to indicate a dynamic routing method suitable to be implemented in either a linear or tree or ring network topology, different from RIP by the fact to be able to expand the number of reachable routers beyond the maximum permissible distance of 15 hops without having impact on existing installations.

Other object of the invention is that to guarantee the protection in case of failure of one of the radio links in a network with enabled extended distance, without loosing efficiency when recovering from a failure.

**SUMMARY AND ADVANTAGES OF THE INVENTION**

The invention achieves said objects by providing a dynamic routing method of IP-based management messages between a communication entity (i.e. TMN-OS) and cascaded TMN routers, as disclosed in claim 1.

The TMN networks considered by the present invention are the ones with linear, or tree, or ring topologies. With these type of networks an unique routing path exists for a determined direction of transmission. The invention starts from the above observation about the univocal routing path to conclude that, in first approximation, the knowledge of real metric is not strictly indispensable. As a consequence, the main object of the invention is that to upgrade the receiving interface of each router with a new configuration parameter called "metric reset flag" usable to force the "reset" of the received metric (distance) figuring the communication entity as being directly connected. Preferably, the resetting router propagates an unitary metric to the subsequent router, which in its turn increments the received metric by one, and so on.

Linear and tree network topologies generally need a redundancy path between directly connected Radio Equipments to guarantee protection in case of failure and/or interruption. Using these topologies the metric reset in very long paths can be forced by only few routers whose number depends on the maximum permitted distance from the communication entity (RIP max distance value of 15 is assumed). A ring network topology offers an alternative path in case of failure of a single radio link, automatically. In fact the isolated Radio Equipments are reachable by simply reversing the direction of transmission, but in this case a strange behaviour is possible in which the IP packets from the communication entity interfaced to the ring are forwarded through the shortest path to reach the destination equipment, but they then will choose the longest way to come back to the communication entity. This is due to the effect of the metric reset by which the communication entity (TMN-OS) is shown nearer than actually it is to the other routers.

According to another object of the invention, this latter problem is solved by forcing a router to accept RIP information (gateway IP-address and metric) about a particular network also if the message comes with a greater metric than the one already stored into the forwarding database. This is done by recurring to another specific configuration parameter, called "Priority interface flag", which can be manually enabled on the router receiving interface. "Priority interface flag" works in conjunction with "Metric reset flag" in ring topology to achieve the correct packets routing either in case of uninterrupted network or in case of single radio link failure. To correctly address the shortest path the "Priority interface flag" can be conveniently asserted only in a limited number of routers closest to the interfaces with "Priority interface flag" enabled.

The advantage of the present invention is that to make remote routers reachable using those TMN data communication channels usually devoted to this scope without requiring extra data connections. The goal is reached without any incompatibility issue with old RIP routers. In other words, a TMN network including routers configured according to the teaching of the present invention can also connect third party routers with a standard RIP protocol running on without requiring any change to their RIP management software.

The invention is independent of RIP version 1 or 2 because the underlined metric limitation it attempts to counteract is a common concepts of the two versions. Obviously, the supplementary features of Version 2 are implemented by the new routers without limitation for the invention. It useful to remind that RIP Version 2 is enhanced with respect to Version 1 by the inclusion of the following extensions: Authentication, Route Tag, Subnet Mask, Next Hop, Multicasting, Queries (see **REF.[3]**).

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1,** already described, shows a telecommunication systems comprising a Telecommunication Network and its Telecommunication Management Network;
- **fig.2,** already described, shows an exemplary Telecommunication Management Network taken from **REF.[3]** in which the known RIP protocol problem called "counting to infinity" may happen;
- **fig.3,** already described, shows a linear radio network topology in which arrows indicate metric propagation according to the standard RIP protocol ;
- **fig.4** shows the network of fig.3 with metric propagation according to the method of the present invention;
- **fig.5** shows a ring radio network topology with metric propagation according to the method of the present invention;
- **fig.6** shows the network of fig.5 with metric propagation according to an upgraded embodiment of the method of the present invention;
- **fig.7** shows a flow chart of the route table updating performed by a radio equipment acting as TMN router inside the network of fig.4 or 5, extended with the method of "metric reset" of the present invention;
- **fig.8** shows an upgrade of the flow chart of fig.7, extended with the method of "priority interface" of the present invention.

## DETAILED DESCRIPTION OF AN EMBODIMENT OF THE INVENTION

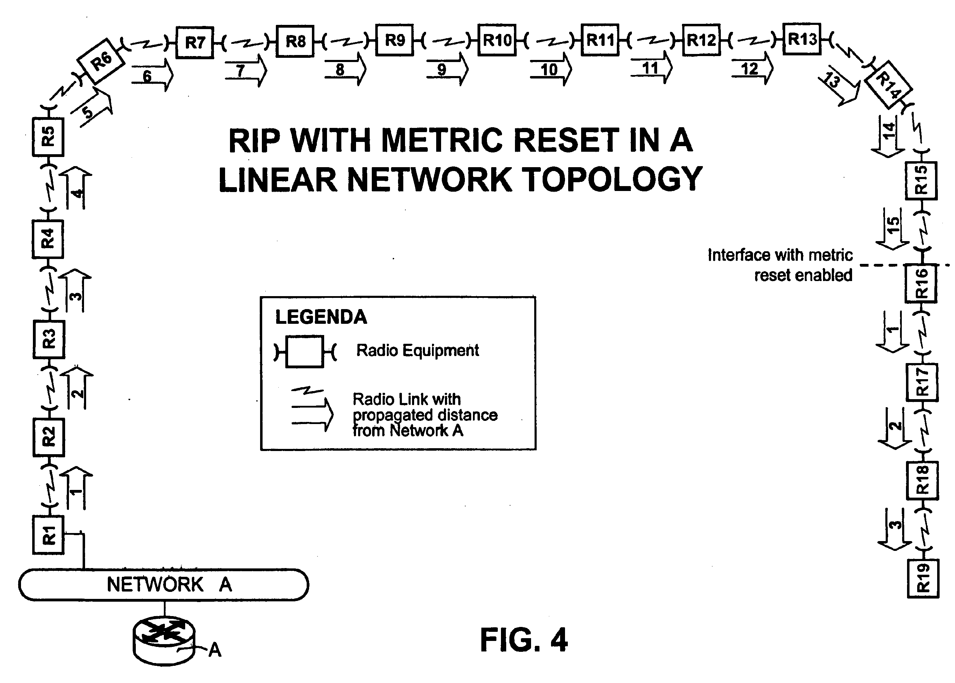

With reference to **fig.4** we see a radio network with the same linear topology as in **fig.3** but with different completion of the chain of metric arrows. The operation of the TMN routers R1 to R15 is the same as in **fig.3,** but R16 has different behaviour. On the receiving interface of router R16 faced to R15 a "metric reset flag" is now enabled (asserted). The router R16 that receives information about Network A form R15 with metric (distance) value of 15 will reset the value to zero before storing 1 into the forwarding database together with the IP address of the sending router R15. Router R16 will now propagate the management message from Network A to its neighbour R17, causing also both R18 and R19 to be aware of it. Thanks to the metric reset, the remote routers R17, R18 and R19 are now capable to reach Network A and vice versa, hence the first goal of "extending" the reaching of Radio Equipment above 15 hops. The metric reset flag could be enabled on the receiving interface of all routers or only in a subset. In presence of a router chain particularly long the routers configured to reset the received metric are the only ones having the position given by 1 plus an integer multiple of the maximum number of contiguous paths (15) permitted by the "no more reachable" metric value (e.g.: 16, 31, 46, etc.).

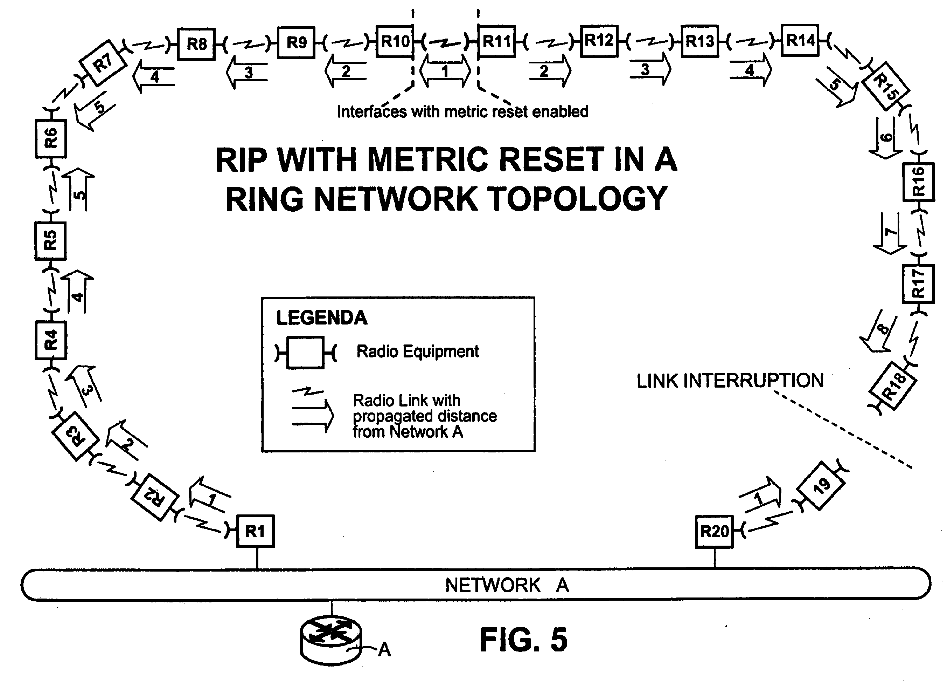

The metric reset of the preceding figure is extended to the ring network topology depicted in fig.5, which is able to recovery from failure of a single radio link. Differently from the linear topology of **fig.4**, the chain of routers is now closed by an additional router R20 connected to Network A. Two metric reset flags are enabled on the receiving interfaces of both R10 and R11 routers instead of the previous unique metric reset performed by router R16. The choice is mainly due to the convenience of a symmetrical metric reset independently of the direction of information along the ring. As a consequence of this choice the clockwise metric behaviour from router R1 to R18 just before link failure is as in the following:

- Metrics that propagate in the right half of the ring uniformly increase from the reset interface of router R11 to R18.

- Metrics that propagate in the first left quarter of the ring uniformly increase from the first router R1 to R6.

- Metrics that propagate in the second left quarter of the ring are uniformly decreasing from router R6 to R11. These apparently strange behaviour is due to the fact that routers R1 and R11 propagates metrics gradually increasing along opposite directions of the ring until at the opposite receiving interfaces of the central router R6 the two metric tendencies compensates to each other. As a consequence router R6 is not in the position to select the next path.

As depicted in **fig.5,** routers R19 and R20 are always reachable, thanks to the metric reset, as from routers behind the RIP limit of 16 (presently unreached), as from routers R16, R17 and R18. Unfortunately the couple of metric reset interfaces causes some drawbacks. A first one happens when the sender router is near to the metric reset couple because the route the IP packet may choice to come back to Network A is not the shorter way. Considering a non interrupted ring, then info from Router R7 comes back to Network A through the longest path R8-R20 instead of R6-R1. A second drawback is that in case of failure of a radio link, as in the figure, reverse the transmission direction to reach routers R19 and R20 is made impossible to the routers of the uninterrupted half near to the metric reset interface (e.g. R6-R10), because their packets are reflected towards said interface erroneously thought as nearer to Network A. Split horizon technique helps, but may not guarantee (e.g. in case of recovery from a fault) that the forwarding database will choose always the shorter way. So we need some other strategy, as shown in the following figure.

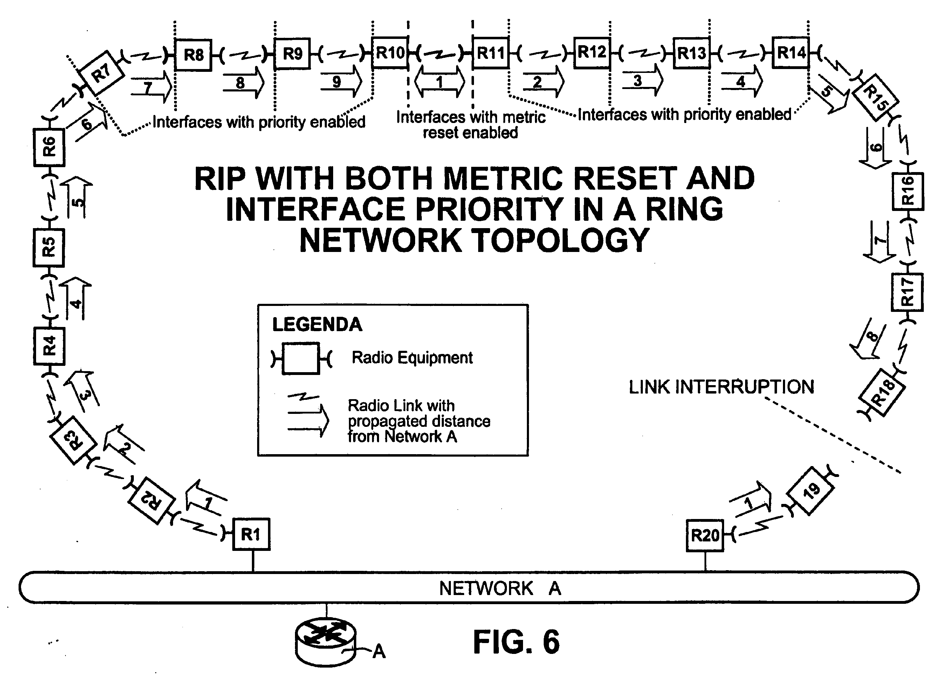

**Fig.6** only differs from the preceding figure by the presence of routers in the ring with an "interface priority flag" enabled (asserted). These routers are the ones near to the metric reset couple, namely, R7-R10 and R11-R14. Considering the metric as unitary, the following general rule can be derived to establish how many routers with "interface priority flag" enabled are involved: *The number of contiguous routers with "interface priority flag" enabled located before a first router with "Metric reset flag" enabled, is equal to integer(N/2), being N the number of routers comprised between said firs router* (also *include), and either the Network A or a nearest router with the "Metric reset flag" enabled.* It is easy to verify that the maximum number of priority routers is 8. An alternative formulation of the aforementioned general rule is the following: *considering a direct metric propagation direction, then the contiguous routers with the "interface priority flag" enabled located before a first router with "Metric reset flag" enabled, are starting from a first one by which the metric received on the reverse direction is lesser than the metric received on the direct propagation direction.*

In the operation, by enabling "Interface priority flag" a router is forced to accept RIP information (IP address of gateway and metric) about Network A even if the message comes with a greater metric than the one already stored into its forwarding database. Differently from **fig.5,** now the metrics are always increasing in the left half of the ring. This guarantees the forwarding database will always choose the shorter way to come back to Network A. This way the ring is covered both for the router reachability and fault management, guaranteeing in the meanwhile the performance of the whole network.

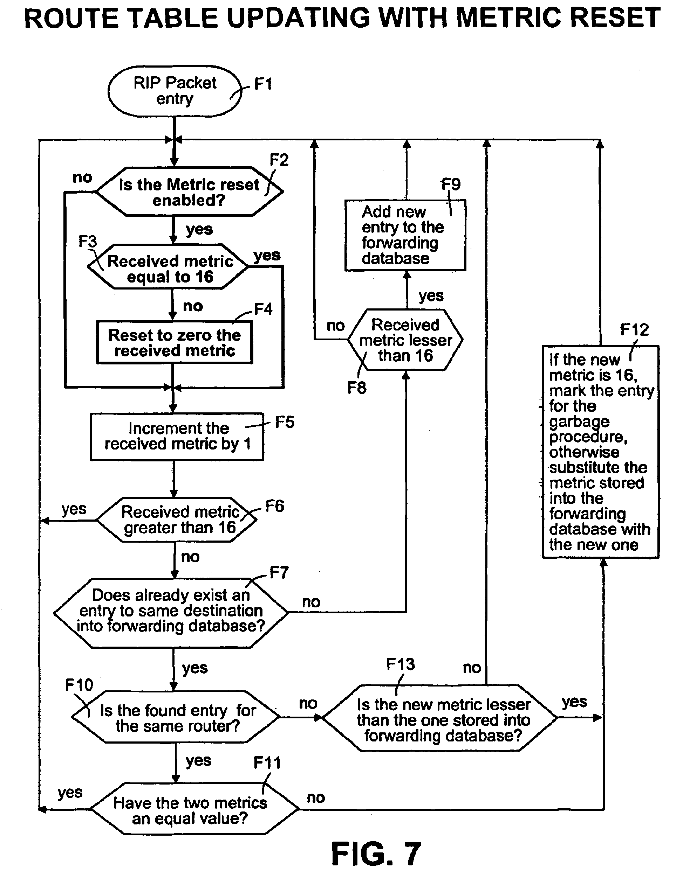

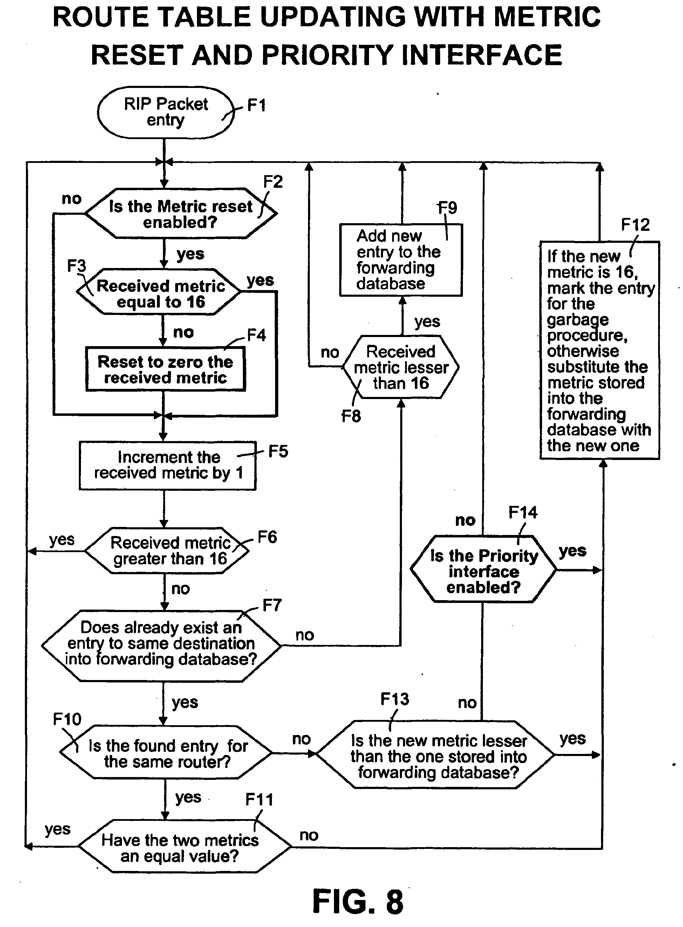

**Figures 7** and **8** report two flow-charts illustrating the operation performed by each router to update its own internal route table used to forward to a contiguous router the TMN IP packets coming from Network A or directed to. The two flow-charts are obtained by upgrading with the features of the present invention a simplified flow-chart of the input algorithm implemented by RIP protocol, where the new features are highlighted with thick-line boxes and bold characters. In standard RIP protocol applications a single RIP message (packet) may hold up to 25 network reachability entries, and for each of these entries the router has to apply the routing algorithm to determine whether, or not, has to upgrade its internal forwarding database (named route table or, already mentioned, RIB). The route table tells the IP layer how to reach a particular network it shall forward TMN information messages. To this aim the route table includes the IP address of each directly connected router that claim to be able to reach the remote network which packet destination belongs.

**Fig.7** concerns the updating of a route table inclusive of the steps for managing the metric reset performed by the routers of **fig.4** and **fig.5**. **Fig.8** adds up to the previous figure the management steps of the priority interface performed by the routers of **fig.6.** Preliminary to the execution of the flow chart of **fig.7** the "Metric reset flag" shall be manually set for either enabling or disabling the reset. This is carried out by providing a "Metric reset switch" whose status on/off is managed like a software-readable sense-point (flag). The flow-chart of **fig.7** starts with the reception of an incoming RIP-fashioned packet which conveys several entries (up to 25 as mentioned before) in the forwarding database, for each destination entry in the packet (e.g. the one constituted with Network A as destination) the steps from F1 will be performed. The entry includes the IP address of the router acting as gateway (next router) and the associated metric. The subsequent steps F2, F3, and F4 correspond to an interrogation about the status of the "Metric reset flag" followed by a reset to zero of the received metric in the only case of both Metric reset is enabled and the metric value is lower than 16. After having incremented the metric value by one (step F5), and the presence of a metric value equal or lower than 16 is ascertained (step F6), the forwarding database is checked to see if an entry to the same destination already exists (step F7). If the answer is no and the received metric is lesser than 16 (step F8), the new entry is added to the forwarding database (step F9). If the answer in step F7 is yes it means that a stored entry for same destination already exists, then the incoming entry is checked to ascertain if the same router as the one of the stored entry is concerned (step F10). In case of positive answer, the incoming incremented and the stored metrics are compared to each other to see if they are equal (step F11). If they are not, the metric stored in the forwarding database is replaced with the incremented one (step F12), unless the incremented metric value is 16 because in such a case the respective entry is marked for the garbage procedure. Let us turn back to the query step F10 and consider the incoming entry for a router different to the one of the stored address (negative branch), then follows a query directed to establish if the new incremented metric is lesser than the stored one for the same entry (step F13). If the answer at step F13 is yes, step F12 is executed otherwise the incoming metric is discarded and step F1 is reproposed to process another incoming entry. Return to step F1 follows steps F9, F12 and the not yet considered answers in steps F6, F8, and F11. Except for F12 when metric different from 16 and F9, in the other cases of return to F1 the received metric is discarded.

Updating the route table is performed parallelly to the routing, which means that nearly about 30 seconds the routing path is updated but during this time the TMN IP packets are constantly forwarded on the selected path.

Preliminary to the execution of the flow chart of **fig.8** the additional "Interface priority flag" shall be manually set for either enabling or disabling the priority at the receiving interface. This is carried out by providing a "Priority interface switch" whose on/off status is managed like a software-readable sense-point (flag). The flow-chart of **fig.8** differs from that of the previous figure by the only introduction of a new query step 14 after the negative answer in step 13. In this case, if the incremented metric is greater than the value stored in the forwarding database, before discarding the new metric the status of the "Priority interface flag" is tested (step 14). If the Priority interface is enabled the step F12 is executed, otherwise the new metric is discarded before returning to step F1. The new step 14 forces the router to accept the incoming metric although it after being incremented is lesser than the stored one, in order to remedy the shortcoming highlighted in the introduction.

From the description of the **figures 7** and **8**, it can be conclude that each entry is evaluated against simple questions like:

- Does the entry contain data that is correct against the standard? If not, discard it.
- Does the entry contain information about a network we yet don't know about? Just add information to the forwarding database.
- Does the entry contains information about a network we already know about? In this latter case, is the shown route shorter than the one we already know? If yes, then upgrade the forwarding database to this shorter way; else simply discard it.

**References**

[1] CCITT: "Recommendation M.3010, Principles for a Telecommunications Management Network", Geneva 1996.

[2] STD 0034 - "Routing Information Protocol (RIP)", Version 1 (Replaced by STD 0056).

[3] STD 0056 (also RFC 2453) - "RIP - Routing Information Protocol", Version 2, G. Malkin, November 1998. (Obsoletes RFC 1723).

[4] STD 0005 - "Internet Protocol", J. Postel, September 1981. (Also RFC 0791, RFC 0792, RFC 0919, RFC 0922, RFC 0950, RFC 1112).

[5] STD 0007 (also RFC 0793), "Transmission Control Protocol", J. Postel, Sept. 01 1981

**Claims**

1. Method for dynamic routing management messages in a Telecommunication Management Network between a communication entity (Network A) and cascaded equipments acting as routers (R1,...R20) also termed gateways for said messages, both routers and the communication entity complying with addressing rules of the Internet Protocol, called IP, where each router executes the steps of:

   - periodically receiving from adjacent routers routing information associated to a value indicative of the distance, also called metric, from said communication entity (Network A);
   - updating the content of a routing table of said management messages with the routing information associated to an incremented metric having the lesser received value, limitedly to a maximum predetermined value of the metric by which said communication entity (Network A) is considered no more reachable;

   **characterized in that** at least a router (R16) which receives a metric (15) lower than said maximum predetermined value is configured to reset the received metric so as the communication entity (Network A) is figured as being as directly connected.

2. The routing method of the claim 1, **characterized in that** the received metric is incremented by one.

3. The routing method of the claim 2, **characterized in that** said maximum predetermined value of the metric is 16 in order to maintain compatibility with already existing installations based on standard Routing Information Protocol, called RIP.

4. The routing method of any preceding claim, **characterized in that** the reset of the received metric is configured manually.

5. The routing method of any preceding claim, **characterized in that** said cascaded routers (R1,....R20) are configured in a ring network topology to guarantee an alternative path for said information messages in case of single interruption between cascaded routers.

6. The routing method of the claim 5, **characterized in that** a predetermined number of contiguous routers (R7-R10, R11-R14) before one configured to reset the received metric (R10, R11) is configured to update the route table with the incoming routing information even if the incremented metric value is greater than the stored one.

7. The routing method of the claim 6, **characterized in that** said predetermined number is equal to integer(N/2), being N the number of routers (R7-R10, R11-R14) comprised between said one configured to reset the received metric (R10, R11) and either the communication entity (Network A) or a nearest router also configured to reset the received metric.

8. The routing method of the claim 1, **characterized in that** the only routers configured to reset the received metric are the ones having positions in the chain given by 1 plus an integer multiple of the maximum number of contiguous paths (15) permitted by said maximum predetermined metric value.

9. The routing method of any preceding claim, **characterized in that** said routers (R1,....R20) are carried out by radio equipments of a point-to-point radio link and said communication entity (Network A) is a network/subnetwork interconnected to Operation System belonging to said Telecommunication Management Network.


**Patentansprüche**

1. Verfahren zum dynamischen Leiten von Managementnachrichten in einem Telekommunikations-Managementnetz zwischen einer Kommunikationsinstanz (Netz A) und auch als Gateways für diese Nachrichten bezeichneten, als Router (R1,...R20) wirkenden kaskadierten Einrichtungen, wobei sowohl Router als auch die Kommunikationsinstanz Adressierungsregeln des IP genannten Internetprotokolls anhalten, wobei jeder Router folgende Schritte ausführt:

- periodisches Empfangen von Nachbarroutern von einem die Entfernung anzeigenden, auch Metrik genannten Wert zugeordneten Leitweginformationen von dieser Kommunikationsinstanz (Netz A);
- Aktualisieren des Inhalts einer Leitwegtabelle der Managementnachrichten mit den einer erhöhten Metrik mit dem geringeren Empfangswert zugeordneten Leitweginformationen, begrenzt auf einen maximalen vorbestimmten Wert der Metrik, bei dem die Kommunikationsinstanz (Netz A) als nicht mehr erreichbar angesehen wird;

**dadurch gekennzeichnet, daß** mindestens ein Router (R16), der eine niedrigere Metrik (15) als der maximale vorbestimmte Wert empfängt, zum Rücksetzen der empfangenen Metrik angeordnet ist, damit die Kommunikationsinstanz (Netz A) als direkt verbunden angesehen wird.

2. Leitwegverfahren nach Anspruch 1, **dadurch gekennzeichnet, daß** die empfangene Metrik um eins erhöht wird.

3. Leitwegverfahren nach Anspruch 2, **dadurch gekennzeichnet, daß** der maximale vorbestimmte Wert der Metrik zum Aufrechterhalten von Kompatibilität zu bereits bestehenden, auf dem standardmäßigen RIP genannten Routing Information Protocol (Leitweginformationsprotokoll) basierenden Einrichtungen 16 beträgt.

**4.** Leitwegverfahren nach einem beliebigen vorhergehenden Anspruch, **dadurch gekennzeichnet, daß** die Rücksetzung der empfangenen Metrik von Hand angeordnet ist.

**5.** Leitwegverfahren nach einem beliebigen vorhergehenden Anspruch, **dadurch gekennzeichnet, daß** die kaskadierten Router (R1,...R20) in einer Ringnetztopologie konfiguriert sind, um im Fall einer einzelnen Unterbrechung zwischen kaskadierten Routern einen alternativen Weg für die Informationsnachrichten zu garantieren.

**6.** Leitwegverfahren nach Anspruch 5, **dadurch gekennzeichnet, daß** eine vorbestimmte Anzahl zusammenhängender Router (R7-R10, R11-R14) vor einem zum Rücksetzen der empfangenen Metrik konfigurierten (R10, R11) zum Aktualisieren der Leitwegtabelle mit den ankommenden Leitweginformationen konfiguriert ist, selbst wenn der erhöhte Metrikwert größer als der gespeicherte ist.

**7.** Leitwegverfahren nach Anspruch 6, **dadurch gekennzeichnet, daß** die vorbestimmte Anzahl gleich Ganzzahl (N/2) ist, wobei N die zwischen dem zum Rücksetzen der empfangenen Metrik angeordneten (R10, R11) und entweder der Kommunikationsinstanz (Netz A) oder einem ebenfalls zum Rücksetzen der empfangenen Metrik angeordneten Router enthaltene Anzahl von Routern (R7-R10, R11-R14) ist.

**8.** Leitwegverfahren nach Anspruch 1, **dadurch gekennzeichnet, daß** die einzigen zum Rücksetzen der empfangenen Metrik angeordneten Router diejenigen mit Stellen in der Kette gegeben durch 1 zuzüglich eines ganzzahligen Mehrfachen der maximalen Anzahl zusammenhängender, durch den maximalen vorbestimmten Metrikwert erlaubter Wege (15) sind.

**9.** Leitwegverfahren nach einem beliebigen vorhergehenden Anspruch, **dadurch gekennzeichnet, daß** die Router (R1,...R20) durch Funkeinrichtungen einer Punkt-Punkt-Funkstrecke ausgeführt sind und die Kommunikationsinstanz (Netz A) ein mit dem zum Telekommunikations-Managementnetz gehörenden Betriebssystem zusammengeschaltetes Netz/Teilnetz ist.

**Revendications**

**1.** Procédé de routage dynamique de messages de gestion dans un réseau de gestion de télécommunications entre une entité de communication (Réseau A) et des équipements en cascade agissant en tant que routeurs (R1, ..., R20), également appelés passerelles pour lesdits messages, les deux routeurs et l'entité de communication se conformant à des règles d'adressage du protocole Internet, appelé IP, où chaque routeur exécute les étapes de :

- réception périodique depuis des routeurs adjacents d'une information de routage associée à une valeur indicative de la distance, également appelée métrique, par rapport à ladite entité de communication (Réseau A) ;
- mise à jour du contenu d'une table de routage desdits messages de gestion avec l'information de routage associée à une métrique incrémentée ayant la valeur reçue la moins importante, avec pour limite une valeur prédéterminée maximum de la métrique pour laquelle on considère que ladite entité de communication (Réseau A) n'est plus atteignable ;

**caractérisé en ce qu'**au moins un routeur (R16) recevant une métrique (15) inférieure à ladite valeur prédéterminée maximum est configuré pour réinitialiser la métrique reçue de manière à ce que l'entité de communication (Réseau A) soit représentée comme étant directement connectée.

**2.** Procédé de routage selon la revendication 1, **caractérisé en ce que** la métrique reçue est incrémentée de un.

**3.** Procédé de routage selon la revendication 2, **caractérisé en ce que** ladite valeur prédéterminée maximum de la métrique est 16 afin de maintenir la compatibilité avec des installations déjà existantes basées sur le protocole d'information de routage standard, appelé RIP.

**4.** Procédé de routage selon l'une quelconque des revendications précédentes, **caractérisé en ce que** la réinitialisation de la métrique reçue est configurée manuellement.

**5.** Procédé de routage selon l'une quelconque des revendications précédentes, **caractérisé en ce que** lesdits routeurs en cascade (R1, ..., R20) sont configurés dans une topologie de réseau en anneau pour garantir un trajet alternatif pour lesdits messages d'information en cas d'interruption unique entre des routeurs en cascade.

**6.** Procédé de routage selon la revendication 5, **caractérisé en ce qu'**un nombre prédéterminé de routeurs contigus (R7-R10, R11-R14) précédant un routeur configuré pour réinitialiser la métrique reçue (R10, R11) est configuré pour mettre à jour la table de routage avec l'information de routage entrante même si la valeur métrique incrémentée est supérieure à la valeur enregistrée.

**7.** Procédé de routage selon la revendication 6, **caractérisé en ce que** ledit nombre prédéterminé est égal à un entier (N/2), N étant le nombre de routeurs (R7-R10, R11-R14) compris entre ledit routeur configuré pour réinitialiser la métrique reçue (R10, R11) et soit l'entité de communication (Réseau A), soit un routeur le plus proche également configuré pour réinitialiser la métrique reçue.

**8.** Procédé de routage selon la revendication 1, **caractérisé en ce que** les seuls routeurs configurés pour réinitialiser la métrique reçue sont les routeurs ayant des positions dans la chaîne qui sont données par 1 plus un entier multiple du nombre maximum de trajets contigus (15) autorisé par ladite valeur de métrique prédéterminée maximum.

**9.** Procédé de routage selon l'une quelconque des revendications précédentes, **caractérisé en ce que** lesdits routeurs (R1, ..., R20) sont exécutés par des équipements radio d'une liaison radio point à point et ladite entité de communication (Réseau A) est un réseau/sous-réseau interconnecté à un système d'exploitation appartenant audit réseau de gestion de télécommunications.

# TELECOMMUNICATION SYSTEM

TELECOMMUNICATION NETWORK

LAN

Data Transmission Radio Equipment

LAN

User Data Termination Equipment

User Data Termination Equipment

DATA COMMUNICATION NETWORK

TELECOMMUNICATION MANAGEMENT NETWORK

OPERATION SYSTEM

Remote Supervision Workstation

Remote Supervision Workstation

LAN

FIG. 1

EP 1 718 003 B1

# TMN EXAMPLE FOR COUNTING TO INFINITY PROBLEM

**FIG. 2**

EP 1 718 003 B1

# RIP STANDARD METRIC MANAGEMENT
# IN A LINEAR NETWORK TOPOLOGY

R6 — R7 — R8 — R9 — R10 — R11 — R12 — R13

R5

R4

R3

R2

R1

NETWORK A

A

## LEGENDA

Radio Equipment

Radio Link with propagated distance from Network A

R14

R15

R16

R17

R18

R19

**FIG. 3**

EP 1 718 003 B1

RIP WITH METRIC RESET IN A
LINEAR NETWORK TOPOLOGY

LEGENDA

Radio Equipment

Radio Link with
propagated distance
from Network A

Interface with metric
reset enabled

NETWORK A

FIG. 4

RIP WITH METRIC RESET IN A
RING NETWORK TOPOLOGY

Interfaces with metric reset enabled

LEGENDA

Radio Equipment

Radio Link with
propagated distance
from Network A

LINK INTERRUPTION

NETWORK A

FIG. 5

EP 1 718 003 B1

RIP WITH BOTH METRIC RESET AND INTERFACE PRIORITY IN A RING NETWORK TOPOLOGY

LEGENDA

)☐( Radio Equipment

Radio Link with propagated distance from Network A

LINK INTERRUPTION

Interfaces with priority enabled

Interfaces with metric reset enabled

Interfaces with priority enabled

NETWORK A

FIG. 6

EP 1 718 003 B1

# ROUTE TABLE UPDATING WITH METRIC RESET

**FIG. 7**

# ROUTE TABLE UPDATING WITH METRIC RESET AND PRIORITY INTERFACE

RIP Packet entry — F1

Is the Metric reset enabled? — F2 / no

Received metric equal to 16 — F3 / yes

Reset to zero the received metric — F4 / no

Increment the received metric by 1 — F5

Received metric greater than 16 — F6 / yes

Does already exist an entry to same destination into forwarding database? — F7 / no

Received metric lesser than 16 — F8 / no

Add new entry to the forwarding database — F9

Is the found entry for the same router? — F10 / no

Have the two metrics an equal value? — F11 / no

If the new metric is 16, mark the entry for the garbage procedure, otherwise substitute the metric stored into the forwarding database with the new one — F12

Is the new metric lesser than the one stored into forwarding database? — F13 / yes

Is the Priority interface enabled? — F14 / yes

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1098480 A
- US 20021176371 A1
- US 2002176371 A1

**Non-patent literature cited in the description**

- *Recommendation M.3010, Principles for a Telecommunications Management Network,* 1996
- **G. MALKIN.** *RIP - Routing Information Protocol,* November 1998
- **J. POSTEL.** *Internet Protocol,* September 1981
- **J. POSTEL.** *Transmission Control Protocol,* 01 September 1981